# EUROPEAN PATENT APPLICATION

(11) **EP 4 693 215 A1**
(43) Date of publication of application: **11.02.2026**
(21) Application number: 24780520.3
(22) Date of filing: 27.03.2024
(51) Int. Cl.: G06V 10/70, G06T 7/70

(54) **PROCESSING DEVICE AND PROGRAM**

(30) Priority: 31.03.2023 JP 2023058093
(71) Applicant: Kyocera Corporation, Kyoto-shi, Kyoto 612-8501 (JP)
(72) Inventor: TSUTSUMI Masafumi, Kyoto-shi, Kyoto 612-8501 (JP)
(74) Representative: TBK
(86) International application number: PCT/JP2024/012398
(87) International publication number: WO 2024/204418

(57) **Abstract**

A processing device includes a recognition unit that obtains a camera image of an opening of a container and recognizes an opening shape of the opening based on the obtained camera image. The container receives an operation target object for a robot.

## Description

### TECHNICAL FIELD

The present disclosure relates to a technique for recognizing a container.

### BACKGROUND OF INVENTION

Patent Literature 1 describes a recognition technique for recognizing the position of an article in a container.

### CITATION LIST

### PATENT LITERATURE

Patent Literature 1: Japanese Unexamined Patent Application Publication No. 2002-68103

### SUMMARY

One or more aspects of the present disclosure are directed to a processing device and a program. In one embodiment, a processing device includes a recognition unit that obtains a camera image of an opening of a container and recognizes an opening shape of the opening based on the obtained camera image. The container receives an operation target object for a robot.

In one embodiment, a processing device includes a recognition unit that recognizes an inner bottom surface defining an opening of a container based on a camera image. The container receives an operation target object for a robot.

In one embodiment, a program causes a computer to function as the processing device described above.

### BRIEF DESCRIPTION OF THE DRAWINGS

FIG. 1 is a schematic diagram of an example processing device.
FIG. 2 is a schematic diagram of an example robot and an example of the surroundings of the robot.
FIG. 3 is a schematic diagram of an example container.
FIG. 4 is a flowchart of an example operation of a recognition unit.
FIG. 5 is a schematic diagram illustrating an example operation of the recognition unit.
FIG. 6 is a flowchart of an example operation of the recognition unit.
FIG. 7 is a schematic diagram illustrating an example operation of the recognition unit.
FIG. 8 is a flowchart of an example operation of the recognition unit.
FIG. 9 is a schematic diagram illustrating an example operation of the recognition unit.
FIG. 10 is a schematic diagram illustrating an example operation of the recognition unit.

### DESCRIPTION OF EMBODIMENTS

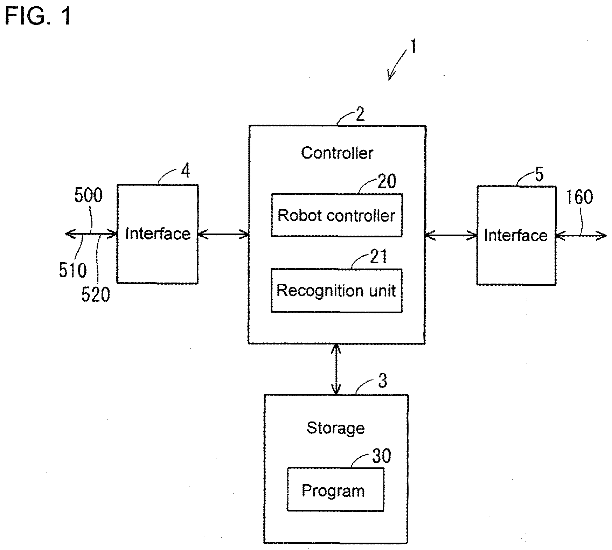

FIG. 1 is a block diagram of a processing device 1, illustrating an example structure. The processing device 1 can recognize, for example, a container 40 that receives an operation target object 100 for a robot 10. For example, the processing device 1 can recognize an opening 400 of the container 40. The processing device 1 can then control the robot 10 based on, for example, the recognition result of the opening 400 of the container 40. In this example, the processing device 1 may be a robot control device that controls the robot 10. The processing device 1 can recognize, for example, openings 400 of corresponding multiple containers 40.

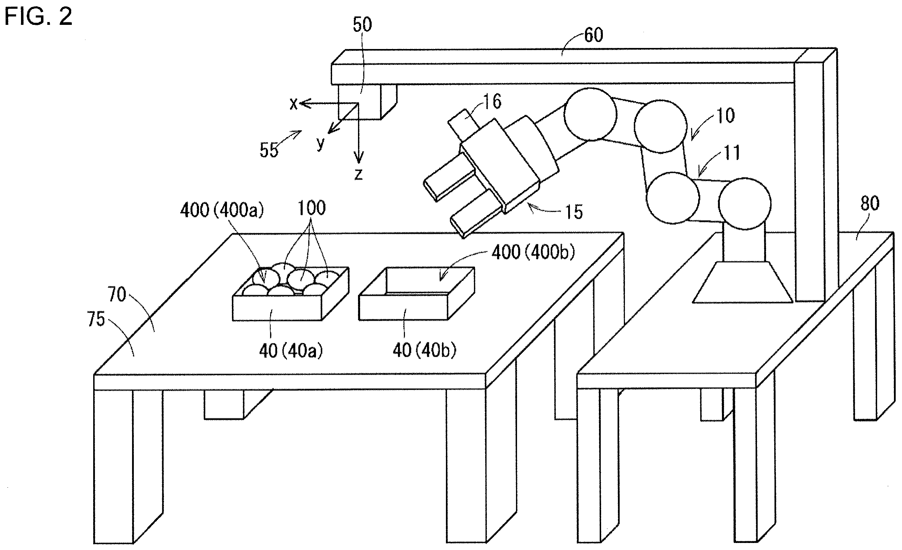

FIG. 2 is a schematic diagram of an example of the robot 10 and an example of the surroundings of the robot 10. The multiple containers 40 are located on, for example, an upper surface 75 of a worktable 70. The multiple containers 40 include a first container 40a and a second container 40b. The robot 10 performs an operation of holding an operation target object 100 in the first container 40a and an operation of placing the operation target object 100 held by the robot 10 in the second container 40b.

The first container 40a receives, for example, multiple operation target object 100. The robot 10 performs, for example, an operation of holding a single operation target object 100 in the first container 40a, transferring the held operation target object 100 to the second container 40b, and placing the operation target object 100 in the second container 40b. This operation is referred to as, for example, pick-and-place. The robot 10 repeats this pick-and-place to transfer the multiple operation target objects 100 in the first container 40a into the second container 40b. Hereafter, an operation of the robot 10 to hold a target object 100 in the first container 40a may be referred to as a picking operation. An operation of the robot 10 to place the held target object 100 in the second container 40b may be referred to as a placing operation.

The first container 40a may be located distant from the second container 40b as illustrated in FIG. 2 or may be located adjacent to the second container 40b. The multiple containers 40 may include multiple first containers 40a and multiple second containers 40b. The first container 40a and the second container 40b may be located on different worktables. The operation target object 100 may be hereafter simply referred to as the target object 100.

The robot 10 includes, for example, an arm 11 and an end effector 15 connected to the arm 11. The end effector 15 can hold the target object 100. The arm 11 includes, for example, multiple joints. A change in the amount of rotation of at least one of the multiple joints changes the orientation of the arm 11. A change in the orientation of the arm 11 changes the position and the orientation of the end effector 15. A change in the orientation of the arm 11 changes the position and the orientation of the target object 100 held by the end effector 15. The end effector 15 can, for example, grip and hold the target object 100 with multiple fingers. Note that the end effector 15 may suck and hold the target object 100.

The robot 10, for example, holds the target object 100 in the first container 40a with the end effector 15, moves the arm 11 (in other words, changes the orientation of the arm 11), transfers the held target object 100 to the second container 40b, and places the target object 100 in the second container 40b.

The robot 10 is fixed to, for example, a base 80. The base 80 receives one end of a holding arm 60 that holds a camera 50. The camera 50 is fixed to the other end of the holding arm 60. The camera 50 can capture an image of the multiple containers 40 on the worktable 70. The camera 50 and the robot 10 may have a fixed relative positional relationship. Note that the camera 50 may be held by a holding arm extending from the worktable 70.

The camera 50 captures an image of the container 40, for example, from above the container 40. The camera 50 is, for example, a three-dimensional camera. The camera 50 captures an image in an imaging range including the multiple containers 40 on the worktable 70 and generates a camera image 500 (refer to FIG. 1). The camera image 500 includes, for example, a color image 510 and a depth image 520 (refer to FIG. 1). The camera 50 outputs the generated camera image 500 to the processing device 1.

The color image 510 is an image that two-dimensionally indicates the color information of measurement points included in the imaging range. Pixel values in the color image 510 are the color information at the measurement points corresponding to the respective pixel values. Multiple pixels included in the color image 510 correspond to different measurement points. The pixel positions of the multiple pixels correspond to the different measurement points. Pixel values in the color image each include, for example, a red component (R component), a green component (G component), and a blue component (B component). The color image 510 is also referred to as an RGB image. The color image 510 includes an image captured in the imaging range. The color image 510 includes the multiple containers 40.

The depth image 520 is an image that two-dimensionally indicates distances from the camera 50 to the measurement points in the imaging range. The depth image 520 is also referred to as a range image. Pixel values in the depth image 520 represent the distances from the camera 50 to the measurement points corresponding to the respective pixel values. Multiple pixels included in the depth image 520 correspond to different measurement points. The pixel positions of the multiple pixels correspond to the different measurement points. The depth image may be obtained with, for example, a stereo method, a time-of-flight (ToF) method, or any other method.

The number of pixels in a row direction (in other words, a horizontal direction) in the color image 510 is, for example, the same as the number of pixels in the row direction in the depth image 520. The number of pixels in a column direction (in other words, a vertical direction) in the color image 510 is, for example, the same as the number of pixels in the column direction in the depth image 520. Pixel values (in other words, color information) at a pixel position in the color image 510 and pixel values (in other words, the distance) at the same pixel position as the pixel position in the depth image 520 correspond to the same measurement point. In other words, the color information at a measurement point in the color image 510 and the distance to the measurement point in the depth image 520 correspond to a pixel at the same pixel position. In still other words, the color information at a measurement point in the imaging range and the distance to the measurement point are represented by the pixel values of pixels at the same pixel position in the color image 510 and the depth image 520.

A camera coordinate system 55 is defined for the camera 50. The camera coordinate system 55 is, for example, an orthogonal xyz coordinate system defined for the camera 50. The camera coordinate system 55 is a coordinate system representing a real space viewed from the camera 50 as a coordinate space. The camera coordinate system 55 has a z-direction defined in, for example, a direction perpendicular to the upper surface 75 of the worktable 70. The camera coordinate system 55 has an XY plane defined, for example, parallel to the upper surface 75 of the worktable 70. The camera coordinate system 55 has a positive z-direction defined in, for example, a direction from the camera 50 to the upper surface 75 of the worktable 70. Pixel values in the depth image 520 represent, for example, the distances from the camera 50 to the corresponding measurement points in the z-direction of the camera coordinate system 55.

The robot 10 includes, for example, a camera 16 that is the same as or similar to the camera 50. The camera 16 is, for example, a three-dimensional camera. As illustrated in FIG. 2, the camera 16 is, for example, fixed to the end effector 15. The camera 16 thus has an imaging range that changes with the orientation of the end effector 15. When the orientation of the end effector 15 changes with the orientation of the arm 11, the imaging range of the camera 16 changes with the orientation of the arm 11.

When the end effector 15 holds the target object 100 in the first container 40a, the camera 16 captures an image of the first container 40a from above the first container 40a. In this case, the imaging range of the camera 16 includes the multiple target objects 100 in the first container 40a. When the target object 100 held by the end effector 15 is placed in the second container 40b, the camera 16 captures an image of the second container 40b from above the second container 40b.

The camera 16 captures an image in the imaging range and generates, for example, a camera image 160 (refer to FIG. 1) including a color image and a depth image in the same or similar manner as the camera 50. When the robot 10 performs the picking operation, the color image included in the camera image 160 includes the first container 40a and the inside of the first container 40a. The color image includes multiple target objects 100 in the first container 40a. When the robot 10 performs the placing operation, the color image includes the second container 40b and the inside of the second container 40b. The camera 16 outputs the generated camera image 160 to the processing device 1. The processing device 1 controls the robot 10 based on the camera image 160 and causes the robot 10 to repeat pick-and-place.

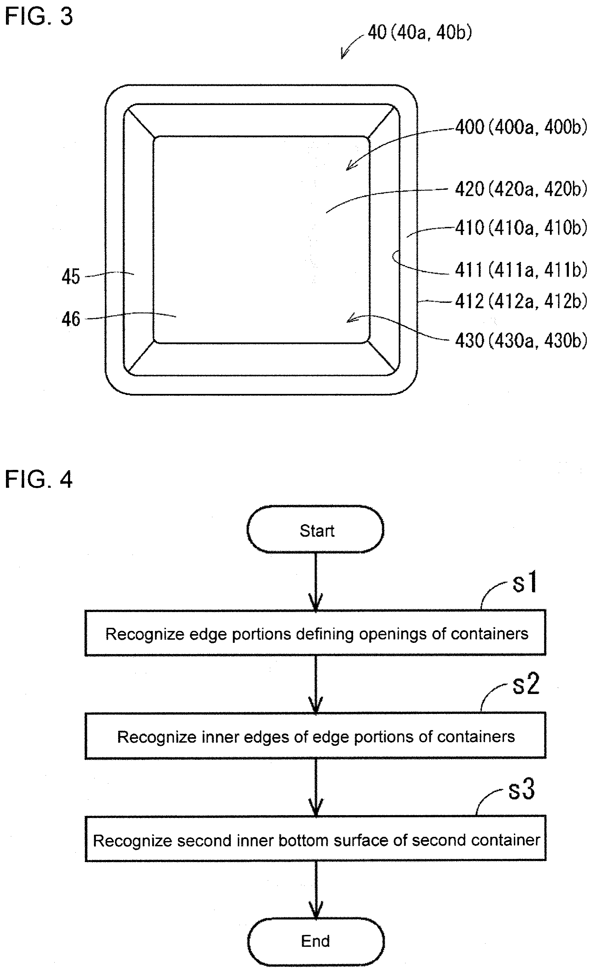

FIG. 3 is a schematic diagram of an example of the container 40. FIG. 3 is a top view of the container 40. The container 40 included in the color image 510 generated by the camera 50 is, for example, oriented as illustrated in FIG. 3.

The container 40 substantially has a profile of, for example, a rectangular prism with an open upper surface. The container 40 includes, for example, a bottom 46 as a plate and a peripheral wall 45 standing on the peripheral portion of the upper surface of the bottom 46. The peripheral wall 45 stands, for example, perpendicularly from the bottom 46. The peripheral wall 45 extends, for example, perpendicularly from the bottom 46. The bottom 46 as viewed in plan has a profile of, for example, a rectangle with round corners. The peripheral wall 45 curves along the edge of the upper surface of the bottom 46 to conform with, for example, the rectangle with round corners.

The bottom 46 and the peripheral wall 45 define the opening 400 of the container 40. The upper surface of the bottom 46 is an inner bottom surface 420 defining the opening 400. The upper end face of the peripheral wall 45 is an edge portion 410 defining the opening 400. The inner bottom surface 420 has the shape of, for example, a rectangle with round corners. The edge portion 410 includes an inner edge 411 and an outer edge 412 each having the shape of, for example, a rectangle with rounded corners. The target object 100 is placed in the container 40 through an opening plane 430 defined by the inner edge 411 of the edge portion 410. The opening plane 430 has the shape of, for example, a rectangle with round corners in the same manner as or in a similar manner to the inner edge 411 of the edge portion 410.

The first container 40a includes the opening 400, the edge portion 410, the inner edge 411, the outer edge 412, the inner bottom surface 420, and the opening plane 430 referred to as, hereafter, a first opening 400a, a first edge portion 410a, a first inner edge 411a, a first outer edge 412a, a first inner bottom surface 420a, and a first opening plane 430a, respectively. The second container 40b includes the opening 400, the edge portion 410, the inner edge 411, the outer edge 412, the inner bottom surface 420, and the opening plane 430 referred to as, hereafter, a second opening 400b, a second edge portion 410b, a second inner edge 411b, a second outer edge 412b, a second inner bottom surface 420b, and a second opening plane 430b, respectively.

The camera 50 captures an image of the first opening 400a of the first container 40a and the second opening 400b of the second container 40b. The color image 510 generated by the camera 50 includes the first opening 400a and the second opening 400b.

In the picking operation, the target object 100 in the first opening 400a of the first container 40a is held. In the placing operation, the target object 100 is placed in the second opening 400b of the second container 40b. The first opening 400a may also be referred to as an operation area for the picking operation, or in other words, an area in which the picking operation is performed. The second opening 400b may also be referred to as an operation area for the placing operation, or in other words, an area in which the placing operation is performed.

### Example Structure of Processing Device

The processing device 1 is, for example, a computer. As illustrated in FIG. 1, the processing device 1 includes, for example, a controller 2, a storage 3, an interface 4, and an interface 5. The processing device 1 may be, for example, a processing circuit.

The interface 4 can communicate with the camera 50. The controller 2 can obtain the camera image 500 generated by the camera 50 through the interface 4. The interface 4 may be, for example, an interface circuit, a communication unit, or a communication circuit. The interface 4 may perform wired or wireless communication with the camera 50.

The interface 5 can communicate with the robot 10. The controller 2 can control the robot 10 through the interface 5. The interface 5 may be, for example, an interface circuit, a communication unit, or a communication circuit. The interface 5 may perform wired or wireless communication with the robot 10. The controller 2 can obtain the camera image 160 generated by the camera 16 included in the robot 10 through the interface 5.

The controller 2 can control other components of the processing device 1 to centrally manage the operation of the processing device 1. The controller 2 may be, for example, a control circuit. The controller 2 includes at least one processor that performs control and processing for implementing various functions, as described in more detail below.

In various embodiments, at least one processor may be implemented as a single integrated circuit (IC), or multiple ICs connected to one another for mutual communication or discrete circuits, or both. At least one processor may be implemented using various known techniques.

In one embodiment, for example, the processor includes one or more circuits or units configured to follow instructions stored in an associated memory to perform one or more data computation procedures or processes. In another embodiment, the processor may be firmware (e.g., a discrete logic component) configured to perform one or more data computation procedures or processes.

In various embodiments, the processor may include one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations to implement the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 30 for controlling the processing device 1. Various functions of the controller 2 are implemented by, for example, the CPU in the controller 2 executing the program 30 in the storage 3.

Note that the structure of the controller 2 is not limited to the above example. For example, the controller 2 may include multiple CPUs. The controller 2 may include at least one digital signal processor (DSP). The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The controller 2 includes, for example, a robot controller 20 that controls the robot 10, and a recognition unit 21 that recognizes the opening 400 of the container 40 based on the camera image 500. The robot controller 20 controls the robot 10 through the interface 5. The robot controller 20 and the recognition unit 21 are functional blocks defined in the controller 2 by, for example, the CPU in the controller 2 executing the program 30 in the storage 3. Note that the functions of the robot controller 20 may be implemented entirely or partially by a hardware circuit without using software to implement the functions. The same or similar structure applies to the recognition unit 21.

The recognition unit 21 recognizes the first opening 400a of the first container 40a and the second opening 400b of the second container 40b based on the camera image 500. The recognition unit 21 recognizes, for example, the opening shape of the first container 40a and the opening shape of the second container 40b. Recognizing the first opening 400a of the first container 40a may also be referred to as recognizing the operation area for the picking operation of the robot 10. Recognizing the second opening 400b of the second container 40b may also be referred to as recognizing the operation area for the placing operation of the robot 10. The robot controller 20 controls the robot 10 based on the recognition result of the openings 400 of the corresponding containers 40 from the recognition unit 21 and the camera image 160 from the robot 10 and causes the robot 10 to perform pick-and-place. Specific example processing of the robot controller 20 to control the robot 10 based on the recognition result from the recognition unit 21 and the camera image 160 will be described later. Example Method for Recognizing Opening of Container

FIG. 4 is a flowchart of an example operation of the recognition unit 21. In step s1, the recognition unit 21 recognizes the edge portion 410 defining the opening 400 of each of the first container 40a and the second container 40b based on the camera image 500 as shown in FIG. 4. The recognition unit 21 recognizes the edge portion 410 of the first container 40a to recognize the opening shape of the first container 40a, and recognizes the edge portion 410 of the second container 40b to recognize the opening shape of the second container 40b. The recognition unit 21 recognizes the edge portion 410 of each of the first container 40a and the second container 40b through, for example, machine learning using the camera image 500 as input data. The recognition unit 21 includes, for example, a neural network that performs instance segmentation, and uses the neural network to recognize the edge portions 410 of corresponding containers 40. Examples of the neural network used to perform instance segmentation are Mask Scoring R-CNN. R-CNN is an abbreviation of region-based convolutional neural networks. The recognition unit 21 uses instance segmentation to recognize the edge portion 410.

The recognition unit 21 inputs the color image 510 included in the camera image 500 into an input layer of a trained neural network. The color image 510 includes the openings 400 of the first container 40a and the second container 40b. The color image 510 may or may not include the operation target object 100. The trained neural network recognizes the edge portions 410 of the corresponding containers 40 based on the color image 510, and outputs the recognition result of the edge portions 410 of the corresponding containers 40. The trained neural network is trained to recognize the edge portion 410 of the container 40 based on the color image of the opening 400 of the container 40.

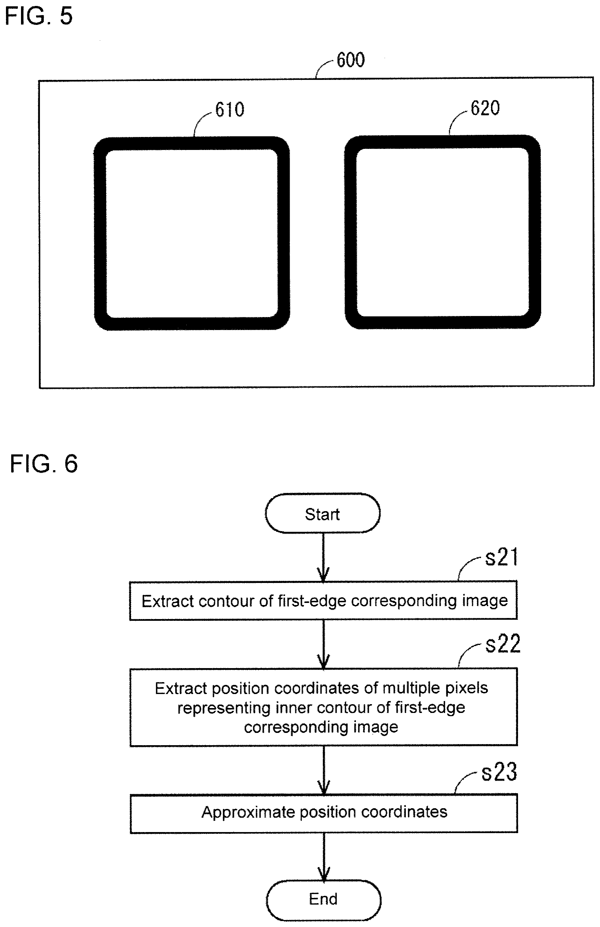

The trained neural network outputs, for example, a mask image 600 of the positions and the shapes of the edge portions 410 of the corresponding containers 40 as the recognition result of the edge portions 410 of the corresponding containers 40. FIG. 5 is a schematic diagram of an example of the mask image 600.

The mask image 600 is, for example, a binary image. The numbers of pixels in the row direction and in the column direction in the mask image 600 are, for example, the same as the numbers of pixels in the row direction and in the column direction in the color image 510. In the mask image 600, for example, each pixel value is "1" in a first partial image 610 corresponding to the first edge portion 410a of the first container 40a. In the mask image 600, for example, each pixel value is "1" in a second partial image 620 corresponding to the second edge portion 410b of the second container 40b. In the mask image 600, each pixel value is "0" in a partial image other than the first partial image 610 and the second partial image 620. The first partial image 610 may hereafter be referred to as a first-edge corresponding image 610. The second partial image 620 may be referred to as a second-edge corresponding image 620.

The position and the shape of the first-edge corresponding image 610 in the mask image 600 are the same as or similar to the position and the shape of a partial image of the first edge portion 410a of the color image 510. The position and the shape of the first-edge corresponding image 610 in the mask image 600 indicate the position and the shape of the first edge portion 410a. The position and the shape of the second-edge corresponding image 620 in the mask image 600 are the same as or similar to the position and the shape of a partial image of the second edge portion 410b of the color image 510. The position and the shape of the second-edge corresponding image 620 in the mask image 600 indicate the position and the shape of the second edge portion 410b.

The recognition unit 21 can distinguish and identify the first-edge corresponding image 610 and the second-edge corresponding image 620 in the mask image 600 based on, for example, input information from a user. The processing device 1 includes an input unit that receives input information from the user. The input unit may include a touch sensor that receives a touch operation performed by the user or a mouse and a keyboard.

In one example, the user inputs, into the processing device 1, information indicating that pick-and-place is performed from a left container 40 to a right container 40. In this case, the left container 40 is the first container 40a, and the right container 40 is the second container 40b. The mask image 600 includes two partial images (also referred to as mask partial images) each having a pixel value of "1." The recognition unit 21 determines that the left mask partial image of the two mask partial images is the first-edge corresponding image 610 and that the right mask partial image is the second-edge corresponding image 620.

In another example, a red container 40 and a blue container 40 are located on the worktable 70, and the user inputs, into the processing device 1, information indicating that pick-and-place is performed from the red container 40 to the blue container 40. In this case, the red container 40 is the first container 40a, and the blue container 40 is the second container 40b. The recognition unit 21 identifies, for each of the two mask partial images included in the mask image 600, the color of pixels in a partial image in the color image 510 (also referred to as a color partial image) at the same position as the corresponding mask partial image. The recognition unit 21 determines that the mask partial image at the same position as the color partial image of red pixels is the first-edge corresponding image 610 and that the mask partial image at the same position as the color partial image of blue pixels is the second-edge corresponding image 620.

After the mask image 600 is generated and the edge portions 410 of the corresponding containers 40 are recognized in step s1, processing in step s2 is performed. In step s2, the recognition unit 21 recognizes the inner edges 411 of the edge portions 410 of the corresponding containers 40 based on the recognition result of the edge portions 410 of the corresponding container 40. For example, the recognition unit 21 recognizes the inner edges 411 of the edge portions 410 of the corresponding containers 40 based on the mask image 600 as the recognition result of the edge portions 410 of the corresponding containers 40.

FIG. 6 is a flowchart of an example process of the recognition unit 21 to recognize the first inner edge 411a of the first container 40a. In step s2, a series of processes shown in FIG. 6 is performed.

In step s21, the recognition unit 21 extracts a contour of the first-edge corresponding image 610 included in the mask image 600 as shown in FIG. 6. More specifically, the recognition unit 21 determines position coordinates in an image coordinate system for multiple pixels representing the contour of the first-edge corresponding image 610 in the mask image 600. The image coordinate system is an orthogonal xy-coordinate system defined for an image. The origin of the image coordinate system is defined at, for example, the pixel position of a pixel at the upper left corner of the image. A positive x-direction in the image coordinate system extends rightward. A positive y-direction in the image coordinate system extends downward. Unless otherwise specified, the position coordinates of a pixel hereafter refer to position coordinates in the image coordinate system.

In step s22, the recognition unit 21 extracts the position coordinates of multiple pixels representing an inner contour of the first-edge corresponding image 610 from the position coordinates of multiple pixels representing the contour of the first-edge corresponding image 610 in the mask image 600. Each of the multiple pixels representing the inner contour of the first-edge corresponding image 610 in the mask image 600 may hereafter be referred to as a first-inner contour pixel.

In step s23, the recognition unit 21 then approximates the position coordinates of multiple first-inner contour pixels representing the inner contour of the first-edge corresponding image 610 with fewer sets of position coordinates. The fewer sets of position coordinates are, for example, the position coordinates of multiple representative points for the inner contour of the first-edge corresponding image 610. Each set of position coordinates of the multiple representative points for the inner contour of the first-edge corresponding image 610 is referred to as first-inner contour representative point coordinates. The recognition unit 21 approximates the position coordinates of the multiple first-inner contour pixels representing the inner contour of the first-edge corresponding image 610 with fewer sets of first-inner contour representative point coordinates.

The multiple representative points for the inner contour of the first-edge corresponding image 610 are, for example, four corners (in other words, four vertices) of the inner contour of the first-edge corresponding image 610. In this case, the multiple sets of first-inner contour representative point coordinates are the position coordinates of the four corners of the inner contour of the first-edge corresponding image 610. The recognition unit 21 approximates the position coordinates of the multiple first-inner contour pixels with the position coordinates of the four corners of the inner contour of the first-edge corresponding image 610. The position coordinates of each of the corners of the inner contour of the first-edge corresponding image 610 may hereafter be referred to as first-inner corner coordinates.

Multiple sets of first-inner contour representative point coordinates represent the position and the shape of the inner contour of the first-edge corresponding image 610. The multiple sets of first-inner contour representative point coordinates are, in one example, four sets of first-inner corner coordinates that represent the positions of the corresponding four corners of the first inner edge 411a of the first edge portion 410a of the first container 40a. In other words, the recognition unit 21 recognizes the positions of multiple portions of the first inner edge 411a based on the recognition result of the first edge portion 410a in step s1. The multiple sets of first-inner contour representative point coordinates represent the position and the shape of the first inner edge 411a. The recognition unit 21 can obtain, for example, four sets of first-inner corner coordinates as the recognition result of the first inner edge 411a. In other words, the recognition unit 21 recognizes the first inner edge 411a by identifying the position and the shape of the inner contour of the first-edge corresponding image 610.

The recognition unit 21 uses the multiple sets of first-inner contour representative point coordinates as the position coordinates of multiple representative points for the first inner edge 411a. The multiple representative points for the first inner edge 411a are, for example, the four corners of the first inner edge 411a. The multiple sets of first-inner contour representative point coordinates may also be referred to as the position coordinates of the four corners of the first inner edge 411a. The recognition unit 21 can obtain the position coordinates of multiple representative points for the first inner edge 411a as the recognition result of the first inner edge 411a. The position coordinates of a representative point for the first inner edge 411a may hereafter be referred to as first-inner edge representative point coordinates. The first-inner edge representative point coordinates obtained in step s2 are position coordinates in the image coordinate system.

In step s2, the recognition unit 21 extracts a contour of the second-edge corresponding image 620 included in the mask image 600 in the same or similar manner. More specifically, the recognition unit 21 determines the position coordinates of multiple pixels representing the contour of the second-edge corresponding image 620 in the mask image 600. The recognition unit 21 then extracts the position coordinates of multiple pixels representing the inner contour of the second-edge corresponding image 620 from the multiple sets of determined coordinates. Each of the multiple pixels representing the inner contour of the second-edge corresponding image 620 in the mask image 600 may hereafter be referred to as a second-inner contour pixel.

The recognition unit 21 then approximates the position coordinates of multiple second-inner contour pixels representing an inner contour of the second-edge corresponding image 620 with fewer sets of position coordinates. The fewer sets of position coordinates are, for example, the position coordinates of multiple representative points for the inner contour of the second-edge corresponding image 620. Each set of position coordinates of the multiple representative points for the inner contour of the second-edge corresponding image 620 is hereafter referred to as second-inner contour representative point coordinates. The recognition unit 21 approximates the position coordinates of multiple second-inner contour pixels representing the inner contour of the second-edge corresponding image 620 with fewer sets of second-inner contour representative point coordinates.

The multiple representative points for the inner contour of the second-edge corresponding image 620 are, for example, four corners of the inner contour of the second-edge corresponding image 620. In this case, the multiple sets of second-inner contour representative point coordinates are the position coordinates of the four corners of the inner contour of the second-edge corresponding image 620. The recognition unit 21 approximates the position coordinates of the multiple second-inner contour pixels with the position coordinates of the four corners of the inner contour of the second-edge corresponding image 620. The position coordinates of each of the corners of the inner contour of the second-edge corresponding image 620 may hereafter be referred to as second-inner corner coordinates.

The multiple sets of second-inner contour representative point coordinates represent the position and the shape of the inner contour of the second-edge corresponding image 620. The multiple sets of second-inner contour representative point coordinates are, in one example, four sets of second-inner corner coordinates that represent the positions of the corresponding four corners of the second inner edge 411b of the second edge portion 410b of the second container 40b. In other words, the recognition unit 21 recognizes the positions of multiple portions of the second inner edge 411b based on the recognition result of the second edge portion 410b in step s1. The multiple sets of second-inner contour representative point coordinates represent the position and the shape of the second inner edge 411b. The recognition unit 21 can obtain, for example, four sets of second-inner corner coordinates as the recognition result of the second inner edge 411b. In other words, the recognition unit 21 recognizes the second inner edge 411b by identifying the position and the shape of the inner contour of the second-edge corresponding image 620.

The recognition unit 21 uses the multiple sets of second-inner contour representative point coordinates as the position coordinates of multiple representative points for the second inner edge 411b. The multiple representative points for the second inner edge 411b are, for example, four corners of the second inner edge 411b. The multiple sets of second-inner contour representative point coordinates may also be referred to as the position coordinates of the four corners of the second inner edge 411b. The recognition unit 21 can obtain the position coordinates of the multiple representative points for the second inner edge 411b as the recognition result of the second inner edge 411b. The position coordinates of a representative point for the second inner edge 411b may hereafter be referred to as second-inner edge representative point coordinates. The second-inner edge representative point coordinates obtained in step s2 are position coordinates in the image coordinate system.

FIG. 6 is a schematic diagram of an example of a contour 660 of the first-edge corresponding image 610 and a contour 670 of the second-edge corresponding image 620 in the mask image 600. In step s2, the recognition unit 21 uses, for example, the position coordinates of four corners 661a (in other words, four sets of first-inner corner coordinates) of an inner contour 661 of the contour 660 of the first-edge corresponding image 610 as the position coordinates of the four corners (in other words, multiple representative points) of the first inner edge 411a of the first container 40a. In step s2, the recognition unit 21 also uses the position coordinates of four corners 671a (in other words, four sets of second-inner corner coordinates) of an inner contour 671 of the contour 670 of the second-edge corresponding image 620 as the position coordinates of the four corners (in other words, the multiple representative points) of the second inner edge 411b of the second container 40b.

After the inner edges 411 defining the openings 400 of the corresponding containers 40 are recognized in step s2, processing in step s3 is performed. In step s3, the recognition unit 21 recognizes the second inner bottom surface 420b of the second container 40b based on the recognition result of the second edge portion 410b of the second container 40b and the depth image 520 included in the camera image 500. In step s3, the recognition unit 21 recognizes, for example, the outer edge of the second inner bottom surface 420b.

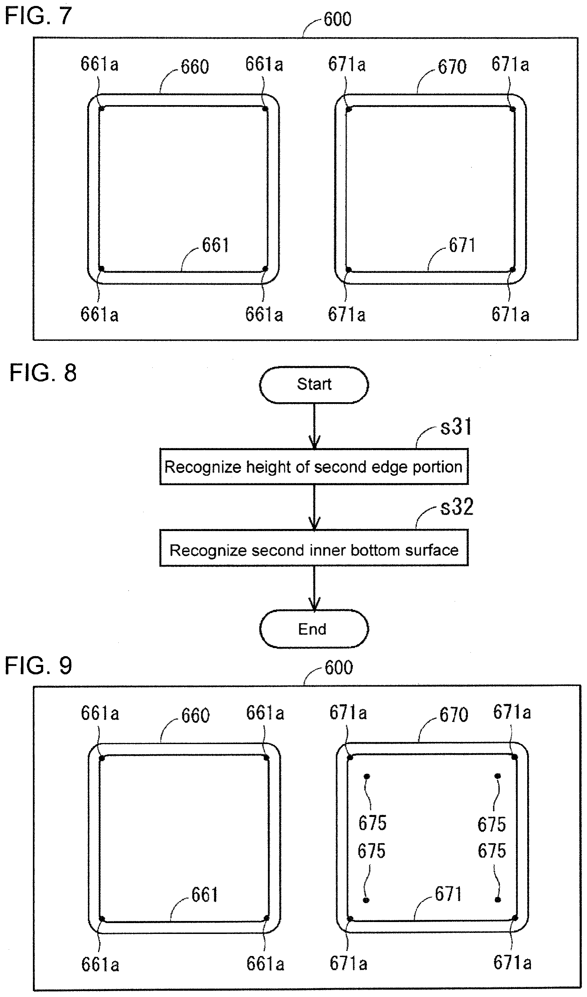

FIG. 8 is a flowchart of example detailed processing in step s3. In step s31, the recognition unit 21 recognizes the height of the second edge portion 410b based on the recognition result of the second edge portion 410b and the depth image 520 as shown in FIG. 8. More specifically, the recognition unit 21 recognizes the height of the second edge portion 410b based on the second-edge corresponding image 620 as the recognition result of the second edge portion 410b and the depth image 520.

The depth image 520 includes pixels each referred to as a first pixel. The mask image 600 includes pixels each referred to as a second pixel. The recognition unit 21 determines, in the depth image 520, an average value (also referred to as a first average value) of pixel values of multiple first pixels that are at the same position coordinates as the corresponding multiple second pixels included in the second-edge corresponding image 620 in the mask image 600. The first average value indicates the distance from the camera 50 to the second edge portion 410b.

The recognition unit 21 also identifies, in the mask image 600, a middle portion of an area surrounded by the inner contour 671 of the second-edge corresponding image 620. The middle portion to be identified includes, for example, multiple second pixels arranged in a matrix. The recognition unit 21 then determines, in the depth image 520, an average value (also referred to as a second average value) of pixel values of multiple first pixels that are at the same position coordinates as the corresponding multiple second pixels included in the identified middle portion of the mask image 600. The second average value indicates the distance from the camera 50 to the second inner bottom surface 420b of the second container 40b.

The recognition unit 21 then uses a value obtained by subtracting the first average value (in other words, the distance from the camera 50 to the second edge portion 410b) from the second average value (in other words, the distance from the camera 50 to the second inner bottom surface 420b) as the height of the second edge portion 410b. In this manner, the height of the second edge portion 410b is recognized. The height of the second edge portion 410b is, for example, the distance from the second inner bottom surface 420b to the second edge portion 410b.

After the height of the second edge portion 410b is recognized in step s31, processing in step s32 is performed. In step s32, the recognition unit 21 recognizes the second inner bottom surface 420b defining the second opening 400b based on the recognition result of the second edge portion 410b and the recognition result of the height of the second edge portion 410b.

In step s32, the recognition unit 21 first converts each set of second-inner edge representative point coordinates (in other words, the corresponding second-inner contour representative point coordinates) in the image coordinate system obtained in step s2 to position coordinates in the camera coordinate system 55. The color image 510 includes pixels each referred to as a third pixel. Converting a set of second-inner edge representative point coordinates in the image coordinate system to position coordinates in the camera coordinate system 55 may also be referred to as determining position coordinates in the camera coordinate system 55 for a measurement point corresponding to a third pixel that is at the same position coordinates as the set of second-inner edge representative point coordinates in the color image 510. The recognition unit 21 then adds the height of the second edge portion 410b to the z-coordinate in each set of second-inner edge representative point coordinates in the camera coordinate system 55, and uses the resultant coordinates as the position coordinates of a representative point for the outer edge of the second inner bottom surface 420b (also referred to as second-inner bottom representative point coordinates).

For example, one set of second-inner edge representative point coordinates (in other words, one set of second-inner contour representative point coordinates) in the camera coordinate system 55 is (x0, y0, z0), and the height of the second edge portion 410b is h. In this case, (x0, y0, z0 + h) is the one set of second-inner bottom representative point coordinates in the camera coordinate system 55. Multiple sets of second-inner bottom representative point coordinates in the camera coordinate system 55 represent the position and the shape of the second inner bottom surface 420b of the second container 40b. When the multiple sets of second-inner edge representative point coordinates are the position coordinates of the four corners of the second inner edge 411b, the representative points for the outer edge of the second inner bottom surface 420b are the corners of the outer edge of the second inner bottom surface 420b. The multiple sets of second-inner bottom representative point coordinates in the camera coordinate system 55 are the position coordinates of the four corners of the outer edge of the second inner bottom surface 420b. In other words, the multiple sets of second-inner bottom representative point coordinates in the camera coordinate system 55 represent the positions of multiple portions of the outer edge of the second inner bottom surface 420b.

The recognition unit 21 then converts each of the multiple sets of second-inner bottom representative point coordinates in the camera coordinate system 55 to position coordinates in the image coordinate system. Converting a set of second-inner bottom representative point coordinates in the camera coordinate system 55 to position coordinates in the image coordinate system may also be referred to as determining position coordinates in the image coordinate system in the color image 510 for a third pixel that corresponds to a measurement point at the position of the set of second-inner bottom representative point coordinates in the camera coordinate system 55. When the multiple sets of second-inner edge representative point coordinates are the position coordinates of four corners of the second inner edge 411b, the multiple sets of second-inner bottom representative point coordinates in the image coordinate system are the position coordinates of four pixels including the corresponding four corners of the second inner bottom surface 520b in the color image 510. The multiple sets of second-inner bottom representative point coordinates in the image coordinate system represent the positions of the four pixels including the corresponding four corners of the second inner bottom surface 520b in the color image 510. The recognition unit 21 can obtain, for example, the multiple sets of second-inner bottom representative point coordinates in the image coordinate system as the recognition result of the second inner bottom surface 520b. When step s32 is performed, step s3 ends. This ends the process of recognizing the openings 400 of the first container 40a and the second container 40b.

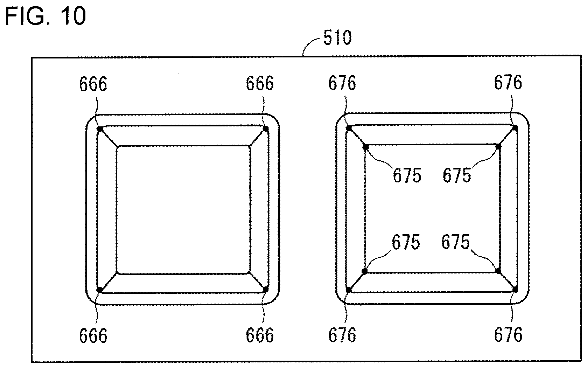

FIG. 9 is a schematic diagram of an example of the mask image 600 illustrated in FIG. 7, illustrating positions 675 of the multiple sets of second-inner bottom representative point coordinates in the image coordinate system. FIG. 10 is a schematic diagram of an example of the color image 510 used to recognize the openings 400 of the corresponding containers 40, illustrating the positions 675 of the multiple sets of second-inner bottom representative point coordinates in the image coordinate system, positions 666 of multiple sets of first-inner edge representative point coordinates in the image coordinate system, and positions 676 of the multiple sets of second-inner edge representative point coordinates in the image coordinate system.

The positions 666 of the multiple sets of first-inner edge representative point coordinates obtained as the recognition result of the first inner edge 411a of the first container 40a are, for example, the same as or similar to the positions of the corresponding four corners of the first inner edge 411a in the color image 510. The positions 676 of the multiple sets of second-inner edge representative point coordinates obtained as the recognition result of the second inner edge 411b of the second container 40b are, for example, the same as or similar to the positions of the four corners of the second inner edge 411b in the color image 510. The positions 675 of the multiple sets of second-inner bottom representative point coordinates obtained as the recognition result of the second inner bottom surface 420b of the second container 40b are, for example, the same as or similar to the positions of the four corners of the outer edge of the second inner bottom surface 420b in the color image 510.

After step s3 ends, the recognition unit 21 notifies the robot controller 20 of the recognition results of the openings 400 of the corresponding containers 40. For example, the recognition unit 21 outputs the multiple sets of first-inner edge representative point coordinates to the robot controller 20 as the recognition result of the first opening 400a of the first container 40a, and the multiple sets of second-inner bottom representative point coordinates to the robot controller 20 as the recognition result of the second opening 400b of the second container 40b.

The robot controller 20 converts each set of first-inner edge representative point coordinates in the image coordinate system received from the recognition unit 21 to position coordinates in a robot coordinate system. Converting a set of first-inner edge representative point coordinates in the image coordinate system to position coordinates in the robot coordinate system may also be referred to as determining position coordinates in the robot coordinate system for a measurement point corresponding to a third pixel that is at the same position coordinates as the set of first-inner edge representative point coordinates in the color image 510. The robot controller 20 also converts the second-inner bottom representative point coordinates in the image coordinate system received from the recognition unit 21 to position coordinates in the robot coordinate system. The robot controller 20 then controls the robot 10 based on the multiple sets of first-inner edge representative point coordinates in the robot coordinate system, the multiple sets of second-inner bottom representative point coordinates in the robot coordinate system, and the camera image 160 to cause the robot 10 to perform, for example, pick-and-place. The robot coordinate system is an orthogonal xyz coordinate system defined for the robot 10. The robot coordinate system is a coordinate system representing a real space viewed from the robot 10 as a coordinate space. Unless otherwise specified, the position coordinates used to describe the operation of the robot controller 20 are position coordinates in the robot coordinate system.

When causing the robot 10 to perform the picking operation, the robot controller 20 identifies a center position of the first opening plane 430a of the first container 40a based on, for example, the multiple sets of first-inner edge representative point coordinates. For example, the robot controller 20 determines average values of the x-coordinates, the y-coordinates, and the z-coordinates of the four sets of first-inner corner coordinates as the multiple sets of first-inner edge representative point coordinates. The robot controller 20 then uses the determined average values of the x-coordinates, the y-coordinates, and the z-coordinates as an x-coordinate, a y-coordinate, and a z-coordinate of the center position of the first opening plane 430a of the first container 40a, respectively. In this manner, the center position of the first opening plane 430a is identified.

The robot controller 20 then controls the orientation of the arm 11 of the robot 10 to position the end effector 15 above the identified center position of the first opening plane 430a. The robot controller 20 captures a largest possible image of the entire first edge portion 410a of the first container 40a with the camera 16. The robot controller 20 recognizes the target objects 100 by identifying the position and the orientation of each of the target objects 100 in the first opening 400a of the first container 40a based on the camera image 160 generated by the camera 16.

The robot controller 20 then determines a target object 100 as an approach target of the end effector 15 from the multiple target objects 100 in the first opening 400a based on the recognition results of the target objects 100 in the first opening 400a. In this case, when the robot controller 20 determines that at least a part of a target object 100 is located outside the first inner edge 411a of the first edge portion 410a defining the first opening 400a based on the position and the orientation identified for the target object 100, the target object 100 is determined as being incorrectly recognized. The target object 100 is not determined as the approach target. The robot controller 20 can identify the position and the shape of the first inner edge 411a based on the multiple sets of first-inner edge representative point coordinates. The robot controller 20 controls the robot 10 to cause the end effector 15 to approach and hold the target object 100 determined as the approach target. In this manner, the picking operation is performed.

When causing the robot 10 to perform the placing operation, the robot controller 20 identifies the position and the shape of the second inner bottom surface 420b defining the second opening 400b of the second container 40b based on, for example, the multiple sets of second-inner bottom representative point coordinates. The robot controller 20 then controls the robot 10 based on the position and the shape of the identified second inner bottom surface 420b to place the target object 100 held by the robot 10 on a specific area in the second inner bottom surface 420b. In this manner, the placing operation is performed.

In the above example, the first inner edge 411a of the first edge portion 410a of the first container 40a is represented by the four sets of first-inner edge representative point coordinates representing the positions of the four corners of the first inner edge 411a. In other words, the first inner edge 411a is represented by four sets of position coordinates. The first inner edge 411a may not be represented by four sets of position coordinates, and may be represented by less than four or five or more sets of position coordinates. The multiple sets of position coordinates representing the first inner edge 411a may include the position coordinates of a position other than the corner of the first inner edge 411a. In the same or similar manner, the second inner edge 411b may be represented by less than four sets of position coordinates or five or more sets of position coordinates. The multiple sets of position coordinates representing the second inner edge 411b may include the position coordinates of a position other than the corner of the second inner edge 411b.

In the above example, the second inner bottom surface 420b defining the second opening 400b of the second container 40b is represented by four sets of second-inner bottom representative point coordinates representing the positions of four corners of the outer edge of the second inner bottom surface 420b. In other words, the second inner bottom surface 420b is represented by four sets of position coordinates. The second inner bottom surface 420b may not be represented by four sets of position coordinates, and may be represented by less than four or five or more sets of position coordinates. The multiple sets of position coordinates representing the second inner bottom surface 420b may include the position coordinates of a position other than the corner of the outer edge of the second inner bottom surface 420b.

The recognition unit 21 outputs position coordinates in the image coordinate system to the robot controller 20 in the above example. However, the recognition unit 21 may output position coordinates in the camera coordinate system 55 to the robot controller 20 or may output position coordinates in the robot coordinate system to the robot controller 20.

For example, the recognition unit 21 may convert the first-inner edge representative point coordinates in the image coordinate system to position coordinates in the camera coordinate system 55 and output the first-inner edge representative point coordinates in the camera coordinate system 55 to the robot controller 20. In this case, the robot controller 20 converts, for example, the first-inner edge representative point coordinates in the camera coordinate system 55 to position coordinates in the robot coordinate system. The recognition unit 21 may also convert the first-inner edge representative point coordinates in the image coordinate system to position coordinates in the robot coordinate system and output the first-inner edge representative point coordinates in the robot coordinate system to the robot controller 20.

The recognition unit 21 may also convert the second-inner bottom representative point coordinates in the image coordinate system to position coordinates in the camera coordinate system 55 and output the second-inner bottom representative point coordinates in the camera coordinate system 55 to the robot controller 20. In this case, the robot controller 20 converts, for example, the second-inner bottom representative point coordinates in the camera coordinate system 55 to position coordinates in the robot coordinate system. The recognition unit 21 may also convert the second-inner bottom representative point coordinates in the image coordinate system to position coordinates in the robot coordinate system and output the second-inner bottom representative point coordinates in the robot coordinate system to the robot controller 20.

In the manner same as or similar to the manner in which the recognition unit 21 recognizes the second inner bottom surface 420b of the second container 40b, the recognition unit 21 may recognize the first inner bottom surface 420a of the first container 40a to determine, for example, the position coordinates of multiple representative points (e.g., four corners) of the outer edge of the first inner bottom surface 420a. In this case, the robot controller 20 may identify a center position of the first inner bottom surface 420a based on the position coordinates of the four corners of the outer edge of the first inner bottom surface 420a determined by the recognition unit 21. In causing the robot 10 to perform the picking operation, the robot controller 20 may control the orientation of the arm 11 of the robot 10 to position the end effector 15 above the identified center position of the first inner bottom surface 420a. When the robot controller 20 determines that at least a part of a target object 100 is outside the outer edge of the first inner bottom surface 420a based on the position and the orientation identified in recognition of the target object 100, the target object 100 is determined as being incorrectly recognized. The target object 100 may not be determined as the approach target.

The recognition unit 21 may not recognize the second inner bottom surface 420b. In this case, the robot controller 20 may identify the position and the shape of the second inner edge 411b of the second container 40b based on, for example, the multiple sets of second-inner edge representative point coordinates determined by the recognition unit 21. When causing the robot 10 to perform the placing operation, the robot controller 20 may control the robot 10 based on the position and the shape of the identified second inner edge 411b to place the target object 100 held by the robot 10 inside the second inner edge 411b.

In this example, as described above, the recognition unit 21 recognizes the opening 400 of the container 40 that receives the operation target object 100 for the robot 10 based on the camera image 500. In this manner, the recognition result of the opening 400 from the recognition unit 21 is used for controlling the robot 10. This improves the controllability of the robot 10. For example, when the recognition result of the opening 400 from the recognition unit 21 is used to control the robot 10 to hold the target object 100 in the opening 400, the robot 10 is controlled more easily. For example, when the recognition result of the opening 400 from the recognition unit 21 is used to control the robot 10 to place the target object 100 in the opening 400, the robot 10 is controlled more easily.

When the recognition unit 21 recognizes the edge portion 410 defining the opening 400 of the container 40 based on the camera image 500 as in this example, the robot 10 is controlled to hold the target object 100 in the opening 400 based on the recognition result of the edge portion 410 from the recognition unit 21 as described above. The robot 10 can thus appropriately hold the target object 100 in the opening 400.

In this example, the recognition unit 21 recognizes the edge portion 410 defining the opening 400 of the container 40 through machine learning using the camera image 500 as input data. The recognition result of the edge portion 410 is thus obtained immediately.

In the present embodiment, the recognition unit 21 generates the mask image 600 for the edge portion 410 of the container 40 through machine learning, and thus can recognize the inner edge of the edge portion 410 easily based on, for example, the mask image 600.

When the recognition unit 21 recognizes the inner edge 411 of the edge portion 410 based on the recognition result of the edge portion 410 as in this example, the target object 100 in the opening 400 incorrectly recognized based on, for example, the camera image 160 can be easily identified based on the recognition result of the inner edge 411 from the recognition unit 21.

In this example, the recognition unit 21 recognizes the inner bottom surface 420 defining the opening 400 of the container 40 based on the camera image 500. In this manner, when the robot 10 is controlled to place the target object 100 on the inner bottom surface 420 based on, for example, the recognition result of the inner bottom surface 420 from the recognition unit 21 as described above, the robot 10 can appropriately place the target object 100 on the inner bottom surface 420.

Although the opening 400 of the container 40 is recognized using a neural network that performs instance segmentation in the above example, another neural network may be used. For example, the recognition unit 21 may include a neural network that performs semantic segmentation in place of the neural network that performs instance segmentation. As illustrated in FIG. 2, when the first container 40a and the second container 40b are located relatively distant from each other, the neural network that performs semantic segmentation can distinguish and recognize the first opening 400a of the first container 40a and the second opening 400b of the second container 40b in the same manner as or in a similar manner to the neural network that performs instance segmentation. Examples of the neural network used to perform semantic segmentation are fully convolutional networks (FCN).

The recognition unit 21 may use a method other than instance segmentation and semantic segmentation to recognize the opening 400 of the container 40. For example, the recognition unit 21 uses a neural network, such as a Faster R-CNN, that performs object detection to determine a bounding box surrounding an area having the container 40 in the color image 510. The recognition unit 21 then cuts out a partial image surrounded by the bounding box from the color image 510. The cut-out partial image includes the opening 400 of the container 40. The recognition unit 21 then performs edge detection on the cut-out partial image to generate a binary edge image. The recognition unit 21 then performs, for example, the Hough transform on the edge image to detect straight lines. The recognition unit 21 then identifies, for example, four straight lines that define a rectangle and correspond to the inner edge 411 of the edge portion 410 defining the opening 400 of the container 40 based on the result of the Hough transformation. In this manner, the position and the shape of the inner edge 411 of the edge portion 410 are identified, and the inner edge 411 of the edge portion 410 is recognized.

When at least one of the color or the shape differs between the first container 40a and the second container 40b, for example, the recognition unit 21 may include a first neural network that recognizes the first opening 400a of the first container 40a and a second neural network that recognizes the second opening 400b of the second container 40b.

For example, each of the first neural network and the second neural network may perform instance segmentation. In this case, the recognition unit 21 may recognize the first inner edge 411a of the first edge portion 410a based on a first mask image for the first edge portion 410a output from the first neural network based on the color image 510. The recognition unit 21 may also recognize the second inner edge 411b of the second edge portion 410b based on a second mask image for the second edge portion 410b output from the second neural network based on the color image 510. The recognition unit 21 may recognize the second inner bottom surface 420b of the second container 40b based on the recognition result of the second inner edge 411b, the second mask image, and the depth image 520.

The recognition unit 21 recognizes the edge portion 410 of the container 40 and recognizes the inner edge 411 of the edge portion 410 based on the recognition result (e.g., the mask image 600) of the edge portion 410 in the above example. However, the recognition unit 21 may directly recognize the inner edge 411 of the edge portion 410 based on the color image 510. In this case, the recognition unit 21 may include a trained neural network that is, for example, trained to recognize the inner edge 411 of the edge portion 410 based on the color image 510. The trained neural network may output the mask image for the inner edge 411 of the edge portion 410. The recognition unit 21 may then recognize the inner bottom surface 420 of the container 40 based on the mask image for the inner edge 411 and the depth image 520.

The recognition unit 21 may directly recognize the inner bottom surface 420 of the container 40 based on the color image 510. In this case, the recognition unit 21 may include a trained neural network that is, for example, trained to recognize the inner bottom surface 420 based on the color image 510.

Although the recognition unit 21 recognizes the opening 400 of the container 40 based on the camera image 500 generated by the camera 50, the recognition unit 21 may recognize the opening 400 of the container 40 based on the camera image 160 generated by the camera 16 on the robot 10 and including the opening 400 of the container 40.

In the above example, the container 40 is a tray-like container. However, the container 40 may have another shape. For example, the container 40 may be a deeper container. The container 40 may have the shape of a quadrangular prism other than a rectangular prism with an upper surface (in other words, one inner bottom surface) being open, a triangular prism with an open upper surface, a polygonal prism, other than a triangular prism or a quadrangular prism, with an open upper surface, or a cylinder with an open upper surface.

In the above example, the processing device 1 can control the robot 10. However, a robot control device other than the processing device 1 may control the robot 10 based on the recognition result of the container 40 from the processing device 1. In this case, the processing device 1 may perform wired or wireless communication with the robot control device to notify the robot control device of the recognition result of the openings 400 of the corresponding containers 40.

The processing device has been described in detail, but the above structures are illustrative in all aspects, and the present disclosure is not limited to the above structures. All the features of the embodiments described above may be combined in use unless any contradiction arises. Many variations not specifically described above may be implemented without departing from the scope of the disclosure.

One or more embodiments of the present disclosure provide the structures described below.

In one embodiment, (1) a processing device includes a recognition unit that obtains a camera image of an opening of a container and recognizes an opening shape of the opening based on the obtained camera image. The container receives an operation target object for a robot.
(2) In the processing device according to (1), the recognition unit recognizes the opening shape by recognizing an edge portion of the opening based on the camera image.
(3) In the processing device according to (2), the recognition unit recognizes the edge portion through machine learning using the camera image as input data.
(4) In the processing device according to (3), the recognition unit generates a mask image for the edge portion through the machine learning.
(5) In the processing device according to any one of (2) to (4), the recognition unit recognizes an inner edge of the edge portion based on a recognition result of the edge portion.
(6) In the processing device according to (5), the recognition unit recognizes positions of a plurality of portions of the inner edge based on the recognition result of the edge portion.
(7) In the processing device according to (6), the plurality of portions includes at least one corner of the inner edge.
(8) In the processing device according to any one of (2) to (7), the recognition unit recognizes, based on the camera image, the edge portion of the container that receives the operation target object to be held by the robot.
(9) In the processing device according to any one of (2) to (8), the camera image includes a depth image, and the recognition unit recognizes a height of the edge portion based on a recognition result of the edge portion and the depth image.
(10) In the processing device according to (9), the recognition unit recognizes an inner bottom surface of the container based on recognition results of the edge portion and the height.
(11) In the processing device according to (1), the recognition unit recognizes an inner bottom surface defining the opening based on the camera image.
(12) In the processing device according to (11), the recognition unit recognizes an outer edge of the inner bottom surface based on the camera image.
(13) In the processing device according to (12), the recognition unit recognizes positions of a plurality of portions of the outer edge based on the camera image.
(14) In the processing device according to (13), the plurality of portions includes at least one corner of the outer edge.
(15) In the processing device according to any one of (11) to (14), the recognition unit recognizes the inner bottom surface of the container that receives the operation target object to be placed by the robot.
(16) A processing device includes a recognition unit that recognizes an inner bottom surface defining an opening of a container based on a camera image. The container receives an operation target object for a robot.
(17) A program causes a computer to function as the processing device according to any one of (1) to (16).

### REFERENCE SIGNS

1 processing device
10 robot
21 recognition unit
30 program
40 container
40a first container
40b second container
100 operation target object
400 opening
400a first opening
400b second opening
410 edge portion
410a first edge portion
410b second edge portion
411 inner edge
411a first inner edge
411b second inner edge
420 inner bottom surface
420a first inner bottom surface
420b second inner bottom surface
500 camera image
520 depth image
600 mask image

## Claims

1. A processing device, comprising:
a recognition unit configured to obtain a camera image of an opening of a container and recognize an opening shape of the opening based on the obtained camera image, the container being configured to receive an operation target object for a robot.

2. The processing device according to claim 1, wherein
the recognition unit is configured to recognize the opening shape by recognizing an edge portion of the opening based on the camera image.

3. The processing device according to claim 2, wherein
the recognition unit is configured to recognize the edge portion through machine learning using the camera image as input data.

4. The processing device according to claim 3, wherein
the recognition unit is configured to generate a mask image for the edge portion through the machine learning.

5. The processing device according to any one of claims 2 to 4, wherein
the recognition unit is configured to recognize an inner edge of the edge portion based on a recognition result of the edge portion.

6. The processing device according to claim 5, wherein
the recognition unit is configured to recognize positions of a plurality of portions of the inner edge based on the recognition result of the edge portion.

7. The processing device according to claim 6, wherein
the plurality of portions includes at least one corner of the inner edge.

8. The processing device according to any one of claims 2 to 7, wherein
the recognition unit is configured to recognize, based on the camera image, the edge portion of the container configured to receive the operation target object to be held by the robot.

9. The processing device according to any one of claims 2 to 8, wherein
the camera image includes a depth image, and
the recognition unit is configured to recognize a height of the edge portion based on a recognition result of the edge portion and the depth image.

10. The processing device according to claim 9, wherein
the recognition unit is configured to recognize an inner bottom surface of the container based on recognition results of the edge portion and the height.

11. The processing device according to claim 1, wherein
the recognition unit is configured to recognize an inner bottom surface defining the opening based on the camera image.

12. The processing device according to claim 11, wherein
the recognition unit is configured to recognize an outer edge of the inner bottom surface based on the camera image.

13. The processing device according to claim 12, wherein
the recognition unit is configured to recognize positions of a plurality of portions of the outer edge based on the camera image.

14. The processing device according to claim 13, wherein
the plurality of portions includes at least one corner of the outer edge.

15. The processing device according to any one of claims 11 to 14, wherein
the recognition unit is configured to recognize the inner bottom surface of the container configured to receive the operation target object to be placed by the robot.

16. A processing device, comprising:
a recognition unit configured to recognize an inner bottom surface defining an opening of a container based on a camera image, the container being configured to receive an operation target object for a robot.

17. A program for causing a computer to function as the processing device according to any one of claims 1 to 16.
